# EUROPEAN PATENT SPECIFICATION

(11) **EP 3 489 770 B1**
(45) Date of publication and mention of the grant of the patent: **07.10.2020**
(21) Application number: 18191435.9
(22) Date of filing: 29.08.2018
(51) Int. Cl.: G04C 17/00, G04C 3/00, G04G 9/00

(54) **WATCH TYPE TERMINAL WITH ANALOG WATCH PART AND SMART FUNCTIONS**
UHRENARTIGES SICHTGERÄT MIT ANALOGEM UHRENTEIL UND SMART FUNKTIONEN
TERMINAL DE TYPE MONTRE AVEC PIÈCE DE MONTRE ANALOGIQUE ET FONCTIONS INTELLIGENTES

(30) Priority: 27.11.2017 US 201762591155 P; 29.12.2017 KR 20170184682
(43) Date of publication of application: 29.05.2019
(73) Proprietor: LG ELECTRONICS INC., Yeongdeungpo-Gu 07336 SEOUL (KR)
(72) Inventor: CHANG, Minkyoung, 06772 Seoul (KR); JOO, Younghun, 06772 Seoul (KR); HA, Won, 06772 Seoul (KR); PARK, Dongcheon, 06772 Seoul (KR)
(74) Representative: Schornack, Oliver

(56) References cited:
- EP-A2- 2 851 756
- WO-A1-2016/039587
- WO-A1-2016/141393
- US-A- 5 889 736
- US-A1- 2017 075 316

## Description

### BACKGROUND OF THE INVENTION

### 1. Field of the Invention

The present invention relates a watch type terminal to which a mechanical analog watch is applied.

### 2. Background of the Invention

Terminals may be divided into mobile/portable terminals and stationary terminals according to mobility. Also, the mobile terminals may be classified into handheld types and vehicle mount types. Further, the mobile terminal includes a wearable device to be wearable on a human body, beyond the typical use of a user grasping the terminal with a hand. An example of this wearable device may include a watch type terminal wearable on a user's wrist.

The functions of such watch type terminals are diversified and evolve into various types of designs. In particular, watch type terminals are similar to analog wristwatches in that they are worn on the user's wrist. Therefore, in order to further satisfy sensitivity of a real analog watch to a watch type terminal, a watch type terminal to which a mechanical analog watch is applied is considered in addition to the analog watch screen. However, even with such a watch type terminal, a short battery life still remains as an issue.

WO 2016/039587 A1 refers to a wearable device configured to be switched to an analog watch mode in which a function performed by the smart watch is not performed.

US 2017/0075316 A1 discloses a smart watch capable of disabling the smart functions while still performing the timekeeping function when the available power drops below a predetermined value.

### SUMMARY OF THE INVENTION

Therefore, an aspect of the detailed description is to provide a watch type terminal which can be easily and quickly switched to a watch mode that can be used without being charged for a long time or as necessary when a battery is low, and an operation method thereof.

Still another aspect of the present invention is to provide an intelligent watch type terminal capable of maintaining only the function inherent to a clock according to a charge amount of a battery or activating other functions as a smart watch by itself, wherein an operation method thereof is also an aspect of the present disclosure useful for the understanding of the present invention.

To achieve these and other advantages and in accordance with the purpose of this specification, as embodied and broadly described herein, the present invention provides a watch type terminal as defined in claim 1. Preferred embodiments are defined by the dependent claims. A watch type terminal according to the present invention includes: main body(101); an analog watch part including mechanical clock hands (10a, 10b) indicating time; a display (151) disposed on the analog watch part; a location information module (115) for acquiring the position of the watch type terminal; a user input unit (123a) disposed on a side surface of the main body(101); and a processor (324) installed in the main body and configured to: receive a control command corresponding to a preset input of the user input unit (123a) while a normal mode in which the processor (324) are turned on and an operation of the analog watch part is performed, and enter a watch mode (312) in which the processor (324) are turned off and the operation of the analog watch part is maintained, in response to the preset input. The processor is further configured to, in response to the execution condition being the determination through the location information module of whether a user wearing the watch type terminal moves to a specific place where various smart functions of the watch type terminal are expected to be restricted, automatically switch to the watch mode so as to prevent the execution of said various smart functions by switching off the processor while operation of the analog watch part is maintained.

The processor (324) may further be configured to: display an execution screen (301) on the display for switching from the normal mode to the watch mode (312) in response to a push input applied to a first key included in the user input unit, and switch from the normal mode to the watch mode (312) and turn the display and the processor to an OFF state in response to a positive feedback input on the execution screen (301).

The processor may further be configured to: prevent other functions of the watch type terminal except for a clock function (325) by the analog watch part in the watch mode (312).

A watch type terminal may further comprise: a power supply unit (190) including a battery providing power to the main body, wherein the processor (324) is further configured to: determine whether a remaining charge amount of the battery is less than a reference value, and switch to the watch mode (312) when the remaining charge amount of the battery is less than the reference value.

The processor (324) may further be configured to display a guidance screen on the display for switching to the watch mode when the remaining charge amount of the battery is less than the reference value.

The reference value may be varied based on a user input.

The processor (324) may further be configured to: switch to the watch mode (312) according to execution of a specific application selected based on a touch input applied to the display (151).

The processor (324) may further be configured to: set when the watch mode is executed using screen information according to the execution of the specific application.

The screen information may comprise at least one of a determined time zone, a determined position, and a determined charge amount of the battery.

The processor (324) may further be configured to: in response to a user input for switching from the watch mode (312) to the normal mode while the battery is being charged, switch to the normal mode based on a charge amount of the battery.

When the charge amount of the battery is less than a reference level, the processor (324) may further be configured to maintain the watch mode (312).

When the charge amount of the battery exceeds the reference level, the processor (324) may further be configured to switch to the normal mode.

A watch type terminal may further comprise: a power supply unit (190) including a battery providing power to the main body, wherein the processor (324) may further be configured to: when the battery of the main body is discharged in the watch mode(312), arrange the mechanical clock hands (10a, 10b) of the analog watch part in a first determined alignment position, and when a user input for switching to the normal mode is received after the battery is charged, arrange the mechanical clock hands (10a, 10b) in a second determined alignment position.

A watch type terminal may further comprise: a power supply unit (190) including a battery providing power to the main body, wherein the processor (324) is further configured to: when a charging connection is released while the battery is being charged in the watch mode(312), maintain the watch mode or switch to the normal mode according to a charge amount of the charged battery.

The display (151) may include a touch screen, and the user input unit may include a plurality of mechanical keys arranged on an outer circumference of the main body.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram of a watch type terminal according to an embodiment of the present invention, and FIG. 1B is a diagram illustrating an example of a watch type terminal according to an embodiment of the present invention.
FIGS. 2A, 2B, and 2C illustrate examples in which information is output to a display during operation of an analog watch in a watch type terminal according to an exemplary embodiment of the present invention.
FIG. 3A is a representative view showing a method of entering a watch mode according to an embodiment of the present invention using a user input in a watch type terminal according to an embodiment of the present invention.
FIG. 3B is a view illustrating functions limited in a watch mode described in the present invention, in a watch type terminal according to an embodiment of the present invention.
FIG. 4 is an exemplary diagram illustrating a method of switching from a watch mode to a general operation mode in a watch type terminal according to an embodiment of the present invention.
FIGS. 5, 6, and 10 are diagrams illustrating examples of various methods for entering a watch mode described in the present invention in a watch type terminal according to an embodiment of the present invention.
FIGS. 7 and 8 are exemplary diagrams illustrating various operation changes when battery charging is performed in a watch mode described in the present invention in a watch type terminal according to an embodiment of the present invention.
FIG. 9A is a view illustrating an example in which a clock function is activated when the power is turned on after charging a battery in a fully discharged state in a watch type terminal according to an embodiment of the present invention.
FIGS. 9B and 9C are views illustrating various operation changes when charging connection is released while a battery is being charged in the watch mode described in the present invention in a watch type terminal according to an embodiment of the present invention.

### DETAILED DESCRIPTION OF THE INVENTION

Hereinafter, description will be given in more detail of a mobile terminal' according to an embodiment of the present invention, with reference to the accompanying drawings.

For the sake of brief description with reference to the drawings, the same or equivalent components will be provided with the same reference numbers, and description thereof will not be repeated. A singular representation used herein may include a plural representation unless it represents a definitely different meaning from the context. In general, a suffix such as "module" and "unit" may be used to refer to elements or components. Use of such a suffix herein is merely intended to facilitate description of the specification, and the suffix itself is not intended to give any special meaning or function.

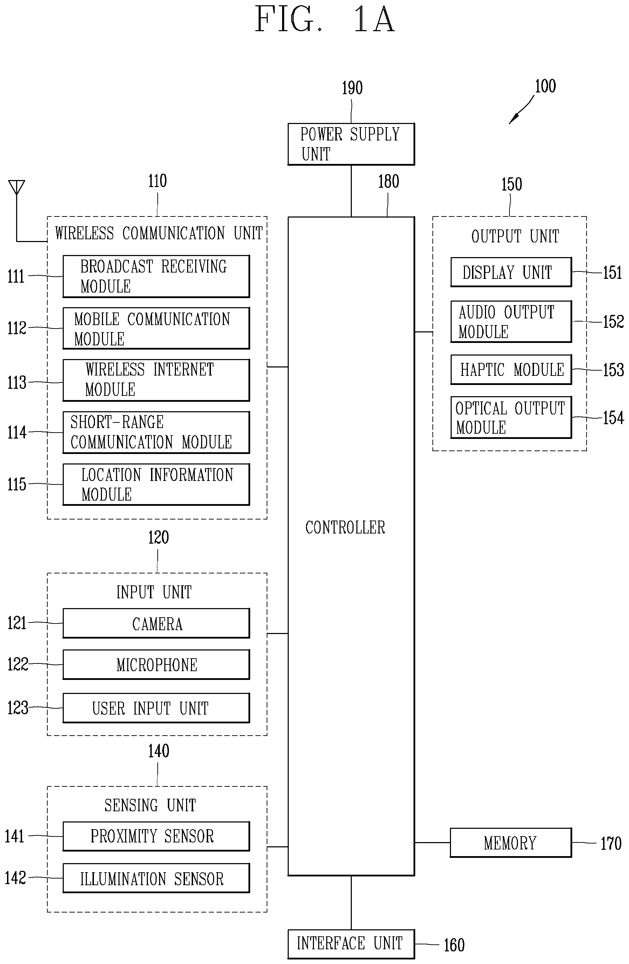

FIG. 1A is a block diagram of a watch type terminal 100 according to one embodiment of the present invention. The watch type terminal 100 may be shown having components such as a wireless communication unit 110, an audio/video (A/V)input unit 120, a user input unit 123, a sensing unit 140, an output unit 150, a memory 170, an interface unit 160, a controller 180, and a power supply unit 190. Those components illustrated in FIG. 1A are not essential, and thus fewer or greater components may implement the watch type terminal 100.

Hereinafter, the components will be described in order. The wireless communication unit 110 may include one or more modules for enabling wireless communication between the watch type terminal 100 and a wireless communication system or between the watch type terminal 100 and a network in which the watch type terminal 100 is located. For example, the wireless communication unit 110 may include a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server through a broadcast channel. The broadcast channel may include a satellite channel, a terrestrial channel, or both. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal in a form that a TV or radio broadcast signal is combined with a data broadcast signal.

Examples of the broadcast associated information may include information related to a broadcast channel, a broadcast program, a broadcast service provider, or the like. The broadcast associated information may be provided via a mobile communication network. In this instance, the broadcast associated information may be received by the mobile communication module 112.

The broadcast associated information may be provided in various forms. The broadcast associated information may be implemented in various formats. For instance, such formats of the broadcast associated information may include Electronic Program Guide (EPG) of Digital Multimedia Broadcasting (DMB), Electronic Service Guide (ESG) of Digital Video Broadcast-Handheld (DVB-H), and the like.

For example, the broadcast receiving module 111 may receive a digital broadcast signal using a digital broadcast system, such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. Of course, the broadcast receiving module 111 may be adapted to other broadcasting systems as well as the digital broadcasting system described above.

The broadcast signal and/or the broadcast related information received through the broadcast receiving module 111 may be stored in the memory 170. The mobile communication module 112 may transmit and receive wireless signals to/from at least one of a base station 10, an external terminal and a server over a mobile communication network. The wireless signal may include various types of data depending on a voice call signal, a video call signal, or a text / multimedia message transmission / reception.

The wireless Internet module 113 refers to a module for wireless Internet access. This module may be internally or externally coupled to the watch type terminal 100. Examples of such wireless Internet access include Wireless LAN (WLAN), Wireless broadband (Wibro), World Interoperability for Microwave Access (Wimax), High Speed Downlink Packet Access (HSDPA) and the like.

The short-range communication module 114 is a module for short-range communication. Suitable technologies for implementing such short-range communications include BLUETOOTHTM, Radio Frequency IDentification (RFID), Infrared Data Association (IrDA), Ultra-WideBand (UWB), ZigBee, and the like. The location information module 115 is a module for acquiring the position of the watch type terminal 100, and a representative example thereof is a Global Position System (GPS) module.

Referring to FIG. 1A, an A/V input unit 120 is for inputting an audio signal or a video signal, and may include a camera 121, a microphone 122 and a user input unit 123. Such cameras 121 may process image frames of still pictures or video obtained by image sensors in a video or image capture mode. The processed image frame may be displayed on the display unit 151. The image frame processed by the camera 121 may be stored in the memory 170 or transmitted to the outside through the wireless communication unit 110. At least two cameras 121 may be provided depending on use environments.

The microphone 122 receives an external sound signal and processes the external sound signal into electric audio data in a communication mode, a recording mode, a voice recognition mode, or the like. The processed audio data may be output by being converted into a format that can be transmitted to a mobile communication base station through the mobile communication module 112 in a call communication mode. If desired, the microphone 122 may include assorted noise removing algorithms to remove unwanted noise generated in the course of receiving the external audio signal.

The user input unit 123 generates input data for a user to control the operation of the terminal. The user input unit 123 may include a key pad, a dome switch, a touch pad (static/capacitance), ajog wheel, a jog switch, and the like.

The sensing unit 140 senses a current state of the watch type terminal 100, such as a position of the watch type terminal 100, presence of the user's contact, an orientation of the watch type terminal 100, acceleration/deceleration of the watch type terminal 100, and the like, and generates a sensing signal for controlling the operation of the watch type terminal 100. The sensing unit 140 may also sense whether an external device is coupled to the watch type terminal 100, or the like. In addition, the sensing unit 140 may further include a proximity sensor 141 and a light or illumination sensor 142.

The output unit 150 is configured to generate visual, audible or tactile output, and may be shown having a display unit 151, an audio output module 152, a haptic module 153, an optical output module, and the like.

The display unit 151 is generally configured to output information processed in the watch type terminal 100. For example, when the watch type terminal 100 is in the call mode, the display unit 151 outputs a UI (User Interface) or GUI (Graphic User Interface) related to the call. When the watch type terminal 100 is in a video call mode or a capture mode, the display unit 151 outputs a captured and/or received image, UI, and GUI.

The display unit 151 may include at least one of a liquid crystal display (LCD), a thin film transistor-LCD (TFT LCD), an organic light-emitting diode (OLED), a flexible display, and a three-dimensional (3D) display. Some of these displays may be transparent or light-transmissive so that external environments are visible therethrough. This may be referred to as a transparent display, and a typical example of the transparent display is TOLED (Transparent OLED) and the like. A rear structure of the display unit 151 may also be configured as a light transmissive type. With this structure, the user can see an object located behind the terminal body through an area occupied by the display unit 151 of the terminal body.

The display unit 151 may be provided by two or more according to the configuration type of the watch type terminal 100. For instance, the watch type terminal 100 may be provided with a plurality of display modules of disposed on one surface in a spaced or integrated manner, or on different surfaces from each other.

When the display unit 151 and a sensor sensitive to a touch (hereinafter, referred to as 'touch sensor') has an interlayered structure (hereinafter, referred to as 'touch screen'), the display unit 151 may also be used as an input device as well as an output device. The touch sensor may have a form of, for example, a touch film, a touch sheet, a touch pad, or the like.

The touch sensor may be configured to convert changes of pressure applied to a specific part of the display unit 151, or capacitance occurring at a specific part of the display unit 151 into electric input signals. The touch sensor may be configured to detect not only position and area to be touched but also pressure at the time of touch.

When a touch input is sensed by a touch sensor, a signal(s) corresponding to the touch input is transmitted to a touch controller. The touch controller may process the received signals, and then transmit corresponding data to the controller 180. Accordingly, the controller 180 can sense which region of the display unit 151 has been touched.

Referring to FIG. 1A, a proximity sensor 141 may be disposed in an inner area of the watch type terminal 100 surrounded by the touch screen or in the vicinity of the touch screen. The proximity sensor refers to a sensor to sense presence or absence of an object approaching a surface or an object located near a surface, by using an electromagnetic field, infrared rays, or the like without a mechanical contact. The proximity sensor 141 may have a longer lifespan and a more enhanced utility than a contact sensor

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen may be sensed by changes of an electromagnetic field. In this instance, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position will correspond to a position where the pointer faces perpendicular to the touch screen upon the proximity touch of the pointer.

The proximity sensor may sense proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 170 in a call signal reception mode, a call mode, a record mode, a voice recognition mode, a broadcast reception mode, and the like. The audio output module 152 also provides audible output signals related to a particular function (e.g., a call signal reception sound, a message reception sound, etc.) performed by the watch type terminal 100. The audio output module 152 may also be implemented as a receiver, a speaker, a buzzer, or the like.

An alarm unit may also be included an output a signal for informing about an occurrence of an event of the watch terminal 100. Examples of events generated in the watch type terminal 100 include call signal reception, message reception, key signal input, touch input, and the like. The alarm unit may also output a signal for informing occurrence of an event in a form, for example, vibration, other than a video signal or an audio signal. The video signal or the audio signal may be output through the display unit 151 or the audio output module 152 and thus they may also be classified as a part of the alarm unit.

The haptic module 153 generates various tactile effects that a user feels, perceives, or otherwise experiences. A typical example of a tactile effect generated by the haptic module 153 is vibration. Intensity and pattern of vibration generated by the haptic module 153 are controllable. For example, different types of vibration may be output in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 154 may be provided according to the particular configuration of the watch type terminal 100. The optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like. A signal output by the optical output module 154 may be implemented so the mobile terminal emits monochromatic light or light with a plurality of colors. The signal output may be terminated as the mobile terminal senses a user's event checking.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the watch type terminal 100 may be operated in relation to a web storage device that performs the storage function of the memory 170 over the Internet.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device may be connected with the terminal 100 via the port.

When the watch type terminal 100 is connected with an external cradle, the interface unit 160 may serve as a passage to allow power from the cradle to be supplied to the watch type terminal 100 therethrough or may serve as a passage to allow various command signals input by the user from the cradle to be transferred to the watch type terminal therethrough. Various command signals or power input from the cradle may operate as signals for recognizing that the watch type terminal is properly mounted on the cradle.

The controller 180 can typically control the general operations of the watch type terminal 100. For example, the controller 180 can perform controlling and processing associated with voice calls, data communications, video calls, and the like. The controller 180 can include a multimedia module for playing back multimedia data. The multimedia module may be configured within the controller 180 or may be configured to be separated from the controller 180.

The controller 180 can perform pattern recognition processing to recognize a handwriting input or a picture drawing input performed on the touch screen as characters or images, respectively. In addition, the controller 180 can include a processor dedicated to a watch-type terminal (access point (AP)), or may be the watch type terminal itself. Further, the processor (AP) may be named as a central processing unit (CPU) and may be used as a concept including a graphics controller (GPU). Therefore, it should be noted that the processor (AP) disclosed below may be the same as or similar to the controller 180.

The power supply unit 190 may receive external power or internal power and supply appropriate power required for operating respective elements and components under the control of the controller 180. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

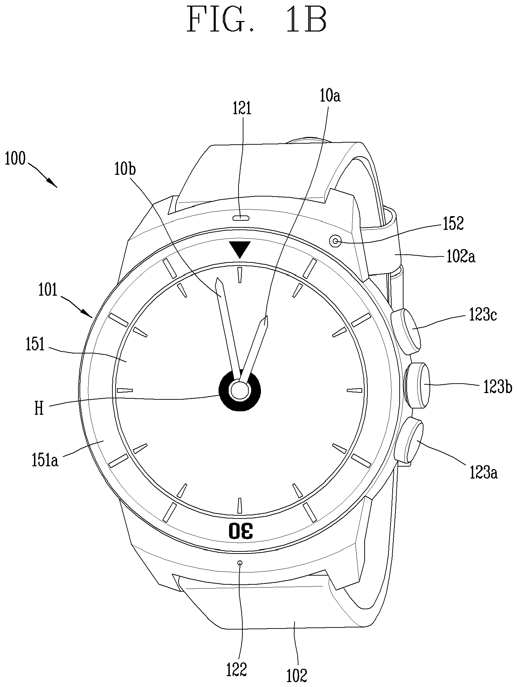

FIG. 1B is a view illustrating an example of a watch type mobile terminal 100 according to one embodiment of the present invention. Referring to FIG. 1B, a watch type mobile terminal 100 includes a main body 101 having a display unit 151, and a band 102 connected to the main body 101 and configured to be worn on a wrist.

The main body 101 includes a case which defines appearance. The case and the band 102 may be made of metal, but are not limited thereto. In addition, the case may include a first case and a second case cooperatively defining an inner space for accommodating various electronic components. However, the present invention is not limited to this, and a single case may alternatively be implemented, with such a case being configured to define the inner space, thereby implementing a watch-type terminal 100 with a uni-body.

The watch-type terminal 100 can perform wireless communication, and an antenna for the wireless communication can be installed in the main body 101. Further, the antenna may extend its function using the case. For example, a case including a conductive material may be electrically connected to the antenna to extend a ground area or a radiation area. When a SIM (Subscriber Identification Module) is built in the watch-type terminal 100 itself, the watch-type terminal 100 can independently transmit and receive calls, messages, and the like without being paired with other devices.

The display unit 151 may be disposed on a front surface of the main body 101 to output information, and a touch sensor may be provided on the display unit 151 to implement a touch screen. As illustrated, a window 151a in the form of a glass cover, for example, is disposed above the display unit 151 to form a body.

In the present invention, a mechanical hand, that is, a hole serving as a center of an actual clock needle is disposed at the center of the display unit 151. Therefore, when information is output to the display unit 151, no information is output to the hole area. In addition, a display unit 151 layered with a touch sensor is disposed on the mechanical hand so that the user can apply a touch input despite the movement of the mechanical hand. When the window 151a is provided on the display unit 151, the user can control a screen output on the display unit 151 through the window 151a.

The main body 101 may include an audio output unit 152, a camera 121, a microphone 122, and may include a user input unit 123a, 123b, 123c, and the like on a side surface thereof. When the display unit 151 is implemented as a touch screen, it can function as a user input unit 123.

The band 102 may be worn on the wrist so as to surround the wrist, and may be formed of a flexible material for easy wearing. As an example, the band 102 may be formed of leather, rubber, silicone, synthetic resin, or the like. The band 102 may be detachably attached to the main body 101, and may be configured to be replaceable with various types of bands according to the user's preference. In another example, the band 102 may be made of a metal material for a high quality.

Further, the band 102 may be used to extend the performance of the antenna. For example, the band may include a ground extending portion that is electrically connected to the antenna and extends a ground region. The band 102 may be provided with a fastener 102a. The fastener 102a may be embodied by a buckle type, a snap-fit hook structure, a Velcro® type, or the like, and include a flexible section or material. The drawing illustrates an example that the fastener 102a is implemented using a buckle. In addition, a sensor may be provided on the rear surface of the main body 101 so as to detect a user's biometric signal, for example, a pulse, when the user wears the watch type terminal on the wrist.

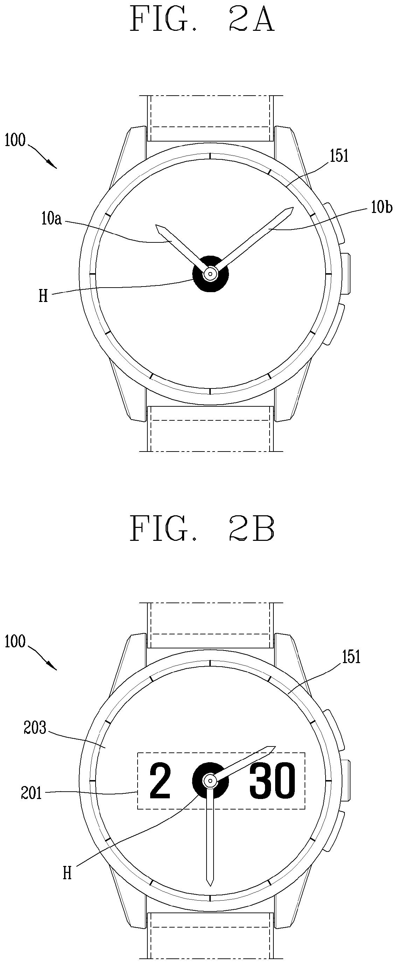

Also, referring to FIG. 2A, the watch type terminal 100 according to an embodiment of the present invention includes an analog watch part including a plurality of mechanical clock hands 10a and 10b indicating time, and a display unit 151 adjacent to the analog watch part, layered on the upper/lower sides and configured to enable a touch input is provided. Further, a plurality of protruding keys are provided on a side surface of the main body, for example, a right side surface, and may be deformed into a recessed shape or a shape integrated with the frame (i.e., not protruded/recessed).

In addition, as shown, a hole H for fixing one end of clock hands are fixed is present at the center of the display unit 151. Thus, a display on which a graphic image is output is arranged on the rear case of the main body, mechanical clock hands 10a and 10b are attached based on the hole H, a touch panel is layered in an upper portion thereof, and a glass type window cover on which a touch input is sensed may be arranged thereon in order.

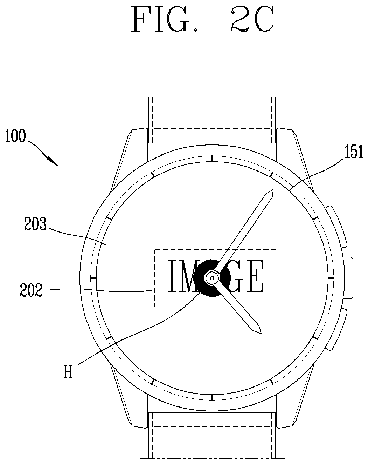

However, the present invention is not limited to this arrangement, and various structures and forms may be possible within a range in which the user's touch input is allowed, regardless of positions of the clock hands, while the display on which a graphic image is output and the mechanical clock hands are shown at the same time. Examples in which application of the clock function by the mechanical clock hands 10a and 10b and the output function of the digital graphic image coexist will be described in detail with reference to FIGS. 2B and 2C.

In particular, FIG. 2B shows an example in which time display by the mechanical clock hands 10a and 10b is output simultaneously with a digital time display 201 output to the display unit 151. At this time, the controller 180 (or the processor) may recognize the fixed area H at the center and control the display unit 151 to output the digital time display 201 by avoiding the corresponding area.

FIG. 2C shows another example in which a portion of a graphic image 202 output to the display portion 151 is covered due to the central fixed hole H region. Also, a touch input applied to the fixed hole H region can be recognized. The controller 180 can recognize an area 202 to which an object partially covered due to the hole H region is output and an area 203 in which an entirely exposed object is output, separately in the graphic images output to the display unit 151, and may be implemented so that individual controlling can be performed.

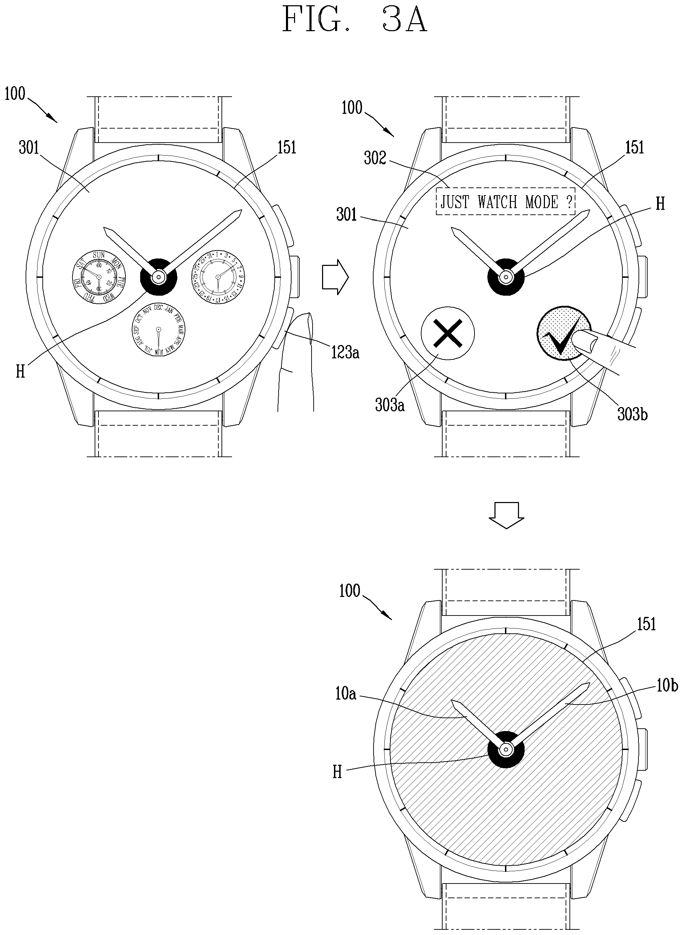

In addition, the watch type terminal 100 according to an embodiment of the present invention having the structure as described above can further maximize efficiency of battery use by further applying the function of the clock using the mechanical clock hands together with various smart clock functions. In this regard, FIG. 3A is a representative view showing a method of entering a watch mode using a user input in the watch type terminal 100 according to an embodiment of the present invention.

Referring to FIG. 3A, when the display unit 151 of the watch type terminal 100 is activated, the controller 180 can sense a predetermined input applied to a lower key 123a among three keys provided on the side of the main body, while various graphic images 301 (e.g., a home screen, an analog clock screen, a screen of a specific application, notification information, card type screen information) are being output.

The predetermined input may be, for example, a double press input, but is not limited thereto. For example, the predetermined input may be a single-press input exceeding a reference pressure or a push input applied together with a touch input applied to an arbitrary point of the display unit 151 at the same time. Alternatively, it may be a push input applied in combination with at least two of the plurality of keys 123a, 123b, and 123c.

In the above description, when the double-press input is detected in the lower key 123a, the mode is switched to the watch mode. However, the present invention is not limited thereto. In an embodiment, when the main body is worn on the user's wrist, the controller 180 can recognize the position of the wrist on which the main body is worn by various sensors included in the sensing unit 140, and when the main body is worn on the left wrist, the aforementioned watch mode may be performed if a double-press input is applied to the upper key 123c.

When the input is detected, the controller 180 can control the display unit 151 to output an execution screen for turning off the display unit 151 and the processor AP while maintaining the operation of the analog clock unit. For example, as shown in FIG. 3A, a query screen 302 requesting a user's feedback input or confirmation of switching to the watch mode (just watch mode) may be output to the display unit 151. The user may select one of the icons 303a and 303b respectively corresponding to affirmative and negative responses to perform a feedback input.

In the query screen 302, when a touch input is applied to the icon 303b corresponding to the affirmative response, the display unit 151 is switched to an inactive state and the processor AP is also switched to an OFF state. Accordingly, a watch mode in which all functions except for the operation of the mechanical clock hands 10a and 10b are switched to the OFF state is performed.

However, in another example, the output of the query screen 302 for feedback input or confirmation may be omitted and immediately switched to the above-described watch mode in response to reception of a predetermined input applied to the side key. When a control command for switching the display unit 151 and the processor AP to the OFF state is executed, execution of all other functions of the main body except for the clock function by the analog clock unit is restricted. As described above, in the watch mode according to an embodiment of the present invention, a time display is maintained even when the watch type terminal 100 is turned off, thereby satisfying battery saving and use as a clock function at the same time.

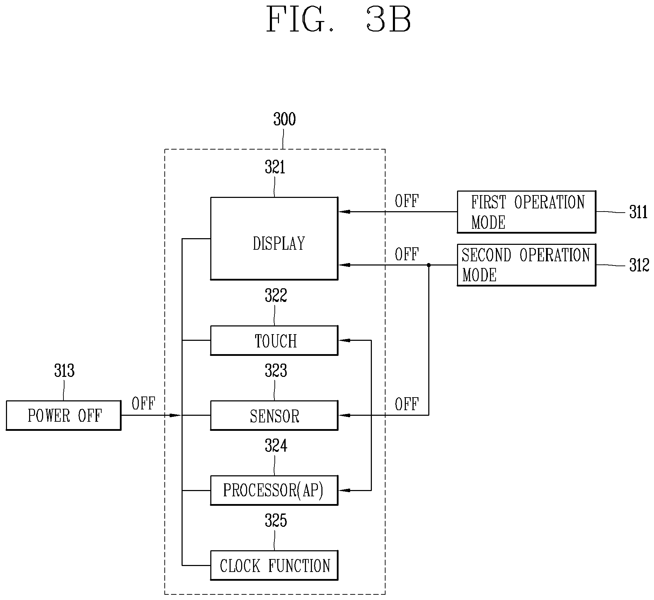

Next, referring to FIG. 3B, functions limited when the watch mode is performed according to an embodiment of the present invention will be described in comparison with other operation modes. In FIG. 3B, a first operation mode 311 is an ambient mode for keeping the display at low power, a second operation mode 312 is a just watch mode in which the processor described in the present invention is OFF but an operation of the mechanical clock hands is maintained. Also, a power OFF state 313 in which even the operation of the mechanical clock hands is completely turned off is illustrated.

In the first operation mode 311, all of a touch 322, a sensor 323, a processor 324 and a clock function 325 are maintained and only the display 321 is kept in a low power mode or off. In contrast, in the second operation mode 312 according to an embodiment of the present invention, the clock function 325 is maintained unlike the power off state 313, but the display 321, the touch 322, the sensor 323, and the processor (AP) 324 are all turned off unlike the first operation mode 311. That is, the function of the clock is maintained, while the battery efficiency is maximized.

Further, when the second operation mode 312 is operated in a full battery state, the clock function is continued for about 90 days. In addition, when operating in the second operation mode 312 only in an empty battery state, the clock function continues for 2 to 3 days. Therefore, in the present invention, the battery can be effectively used, and even when the battery is very empty, the analog watch hand may continue to operate to use the watch for a long time.

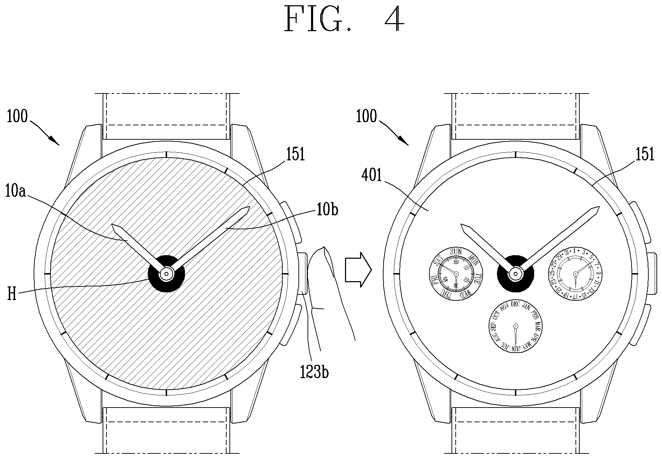

Hereinafter, various examples of switching from one of the watch mode and the normal mode to another according to an embodiment of the present invention will be described in detail with reference to FIGS. 4-6 and 10. First, FIG. 4 is an exemplary diagram illustrating explaining a method of switching from a watch mode to a normal mode according to an embodiment of the present invention. First, when a feedback input to the query screen 302 of FIG. 3A is received, the controller 180 can store information (for example, an executed application, an execution step, edited information, etc.) related to screen information output on the display unit 151 before the query screen 302 is output, in the memory 170. This is to immediately enter an operation which was last executed when the watch mode is switched back to the normal mode.

Thereafter, while the watch mode in which the processor is turned off is performed, when a predetermined input, for example, a press-and-hold input or a long press input, is applied to a center key 123b or a power key on the side of the main body as shown in FIG. 4, the processor (AP) is turned on and the watch mode is switched to the normal mode. In addition, the number of times of input, pressure, and a position of the specific key mentioned herein are not limited thereto and may be variously modified as described above.

Accordingly, the operation of the mechanical clock hands 10a and 10b is continued and the display unit 151 is activated to output screen information 401 output before switching to the watch mode. That is, the operation mode is restored. Thus, when the processor AP is turned on, information related to the screen information output to the display unit 151 before the query screen 302 stored in the memory 170 is output is called.

Further, in the watch mode, no input is operated except for pressing the center key 123b on the side of the main body, that is, the power key. For example, when a predetermined tab is added to the display unit 151 or other keys on the side are pressed, performing of the corresponding function is limited and only the original clock function is maintained.

When the processor (AP) is turned on and is switched to the normal mode, the functions that were restricted during the watch mode can be performed immediately. For example, push alarms for events that occurred during the watch mode may be output at once. Also, when an input for switching to the watch mode is received within a predetermined time (for example, within 1 minute) after switching to the normal mode, it is regarded that the operation mode is temporarily switched to check an event, and the mode may be switched to the watch mode immediately without a user's feedback input or confirmation.

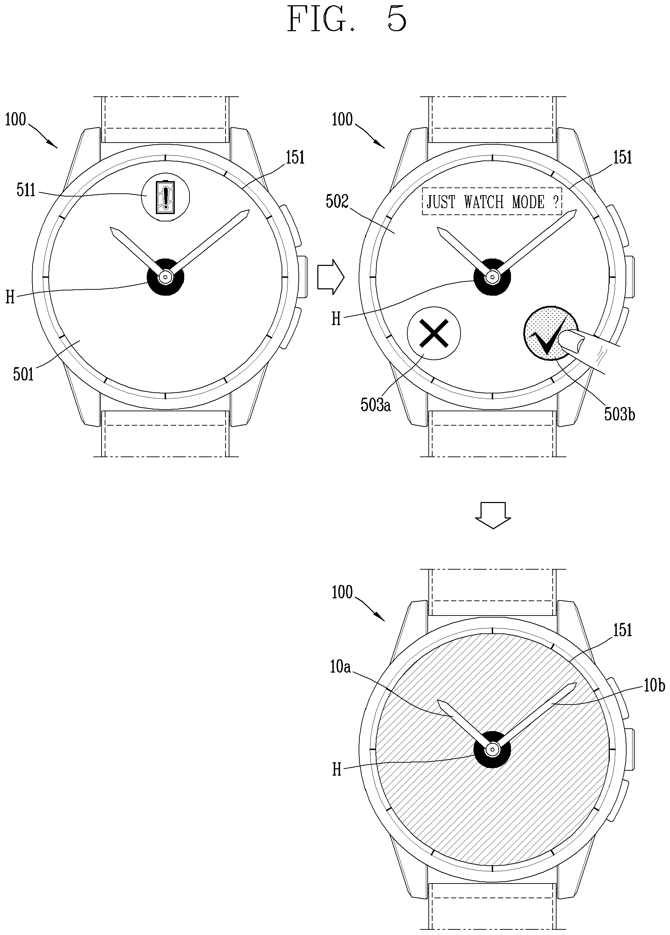

Next, FIGS. 5, 6, and 10 show examples of various methods for entering the watch mode described in the present invention, in a watch type terminal according to an embodiment of the present invention. For example, FIG. 5 shows an example of generating a notification for inducing switching to the watch mode when the battery of the watch type terminal 100 is low, and switching to the watch mode. The controller 180 of the watch type terminal 100 can recognize whether a remaining charge amount of the battery included in the power supply unit 190 is less than a reference value.

If the remaining charge amount is less than the reference value, an indicator 511 indicating battery shortage is displayed in one area of the display unit 151. Then, the processor switches the display unit 151 and the processor itself to an OFF state, while maintaining the operation of the analog clock unit, thereby performing the watch mode.

In one example, as shown in FIG. 5, before the display unit 151 and the processor are turned off, a guidance screen 502 that guides switching to the watch mode can be output. Based on a user response (touch input to 503a or 503b) on the guidance screen 502, switching to the watch mode can be performed or the current operation mode (automatic switching to the ambient mode when the battery is low) can be maintained.

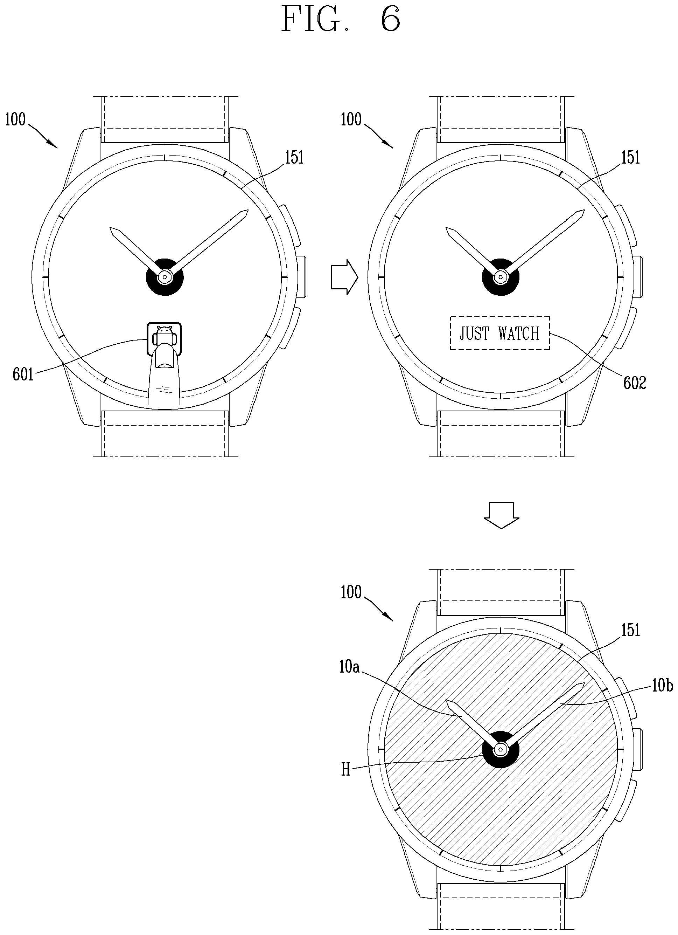

As another example, as illustrated in FIG. 6, an icon 601 of an application for execution of the watch mode output to the display unit 151 can be touched to enter a corresponding application, and then the mode can be switched to the watch mode by using the output execution screen 602.

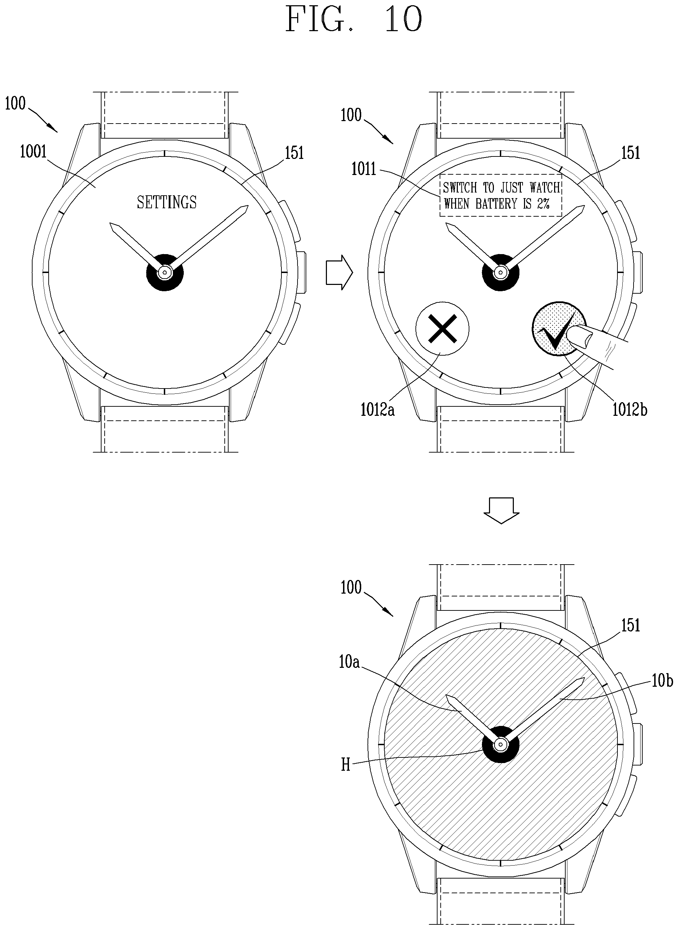

As another example, as shown in FIG. 10, a settings application is entered (1001) to set a remaining battery amount (e.g., 2%) for switching the current operation mode to the watch mode (1011) and when the remaining amount of the battery is less than the set value through a feedback response (by touching icon 1012a or 1012b), the mode is automatically switched to the watch mode according to the setting information.

In addition, the set value of the remaining battery amount for switching to the watch mode can be varied based on a user input in the setting application. That is, the set value may be changed to be smaller than 2% or to be greater. In this instance, if the battery remaining amount is less than the set value, the mode can be automatically switched to the watch mode, without additional notification, and thus, battery saving can be minimized.

As another example, the setting application can be entered (1001) and an execution condition of the watch mode can be directly set. Here, the execution condition may be at least one of a predetermined time zone, a predetermined position, and a predetermined battery charge amount. In the present invention, when a user wearing the watch type terminal 100 moves to a specific place (e.g., library, school, church, etc.) where various smart functions are expected to be restricted or enters a place designated by the user, the watch type terminal switches to the watch mode automatically through position detection using GPS, or the like.

In addition, for example, when the user of the watch type mobile terminal 100 enters a specific time zone (for example, 1:00 p.m.) designated by the user, the current operation mode can be automatically switched to the watch mode. However, to prevent data loss, tasks that were performed before switching to watch mode can be automatically stored in memory. In addition, the execution condition may not be applied to switching from the watch mode to the normal mode. That is, once the mode is switched to the watch mode, the processor is turned off, so that it is impossible to set a condition for releasing the watch mode.

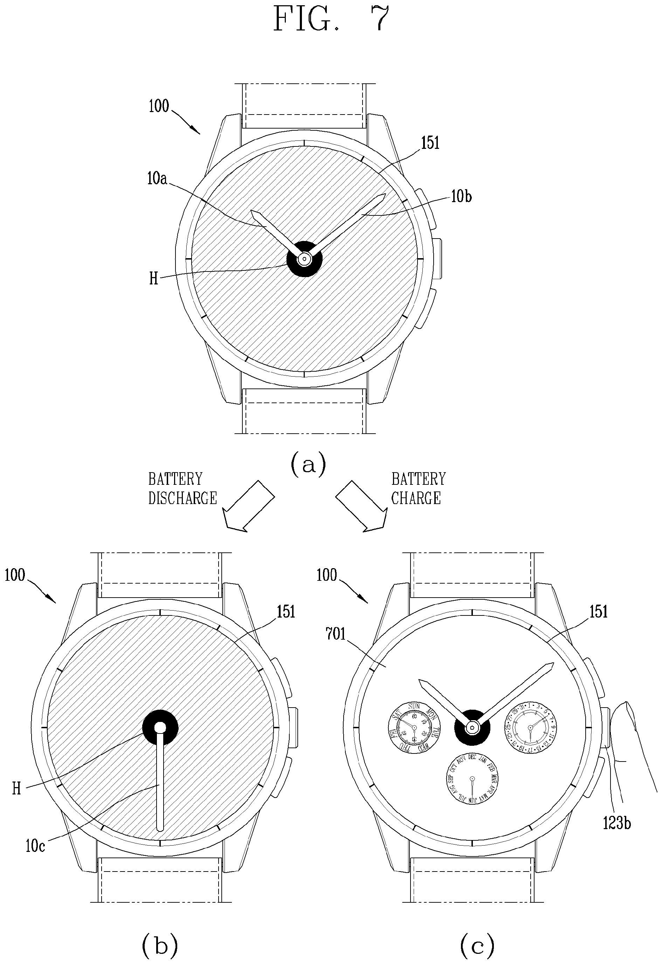

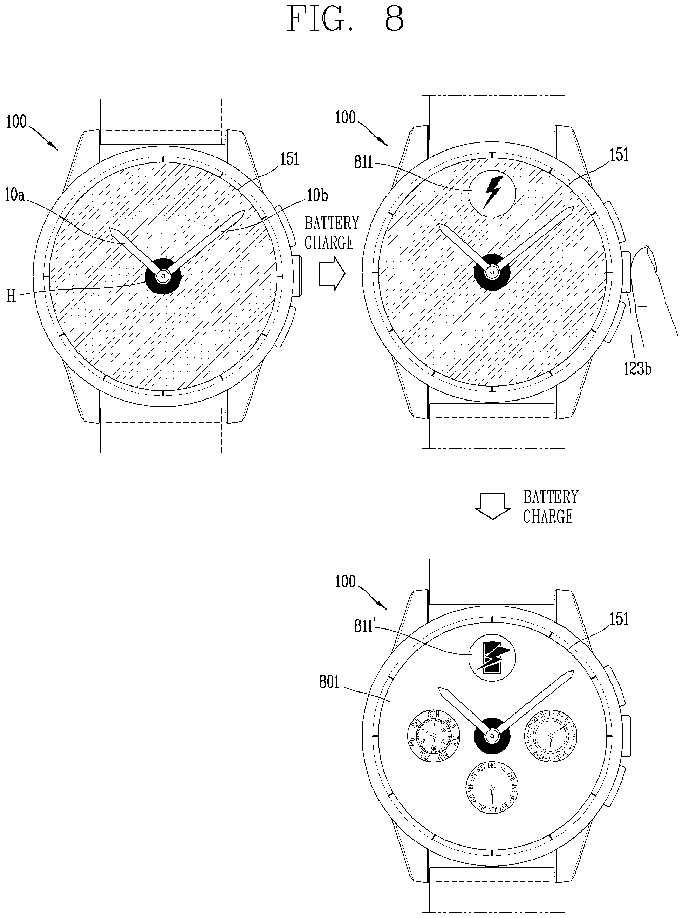

Hereinafter, various operation changes occurring when the battery is charged in the watch mode described in the present invention will be described in detail with reference to FIGS. 7 and 8. First, referring to FIG. 7, the battery of the watch type terminal 100 is discharged in a very small amount (for example, about 0.11 mA) during the operation in the watch mode (a). As a result, the clock function is stopped as in the power off state 313 described with reference to FIG. 3B.

Then, as shown in (b) of FIG. 7, at the time when the main body is completely discharged, the plurality of clock hands are aligned at a predetermined position so that the user can intuitively know that the clock function is stopped at present. For example, as a clock hand indicating 'hour' and a clock hand indicating 'minute' simultaneously point to '6:00' (a time that may not occur), the user can intuitively know that the clock function has been stopped. In addition, the battery is charged during an operation of the watch mode (a), and when an input is received in the power key 123b, the processor is turned on and a screen 701 switched to the normal mode as shown in (c) is output.

FIG. 8 shows an exemplary operation of the intelligent watch type terminal 100 which selectively maintains the watch mode or is automatically switched to the normal mode according to a charge amount even when the battery is charged. Specifically, when an input for switching the processor to an ON state is received, that is, when an input is received in the power key, while the battery is being charged in the watch mode, the processor switches the display unit 151 to an ON state or switches the processor itself to an OFF state again to maintain the watch mode.

In addition, even if it is determined to maintain the watch mode due to shortage of the charge amount of the battery, when the charge amount exceeds a determined reference level according to continuation of the battery charge, the mode can be switched to the normal mode even without an additional input. Thus, if it is determined to keep the watch mode ahead, it is actually implemented to perform the watch mode with only the processor (AP) turned on. That is, when the power key 123b is turned on in FIG. 8, it is seen that the watch mode is maintained except a battery charge indication 811, but the processor AP is actually turned on.

Accordingly, when the battery charge amount exceeds the reference level, a battery charge indication 811' is automatically turned on throughout the display unit 151 without pushing the power key 123b (801). This is because the user has already pressed the power key in advance and charging has lasted for some time, so it is no longer necessary to keep the battery consumption minimized. However, when the mode is switched from the watch mode to the normal mode, notification information can be provided in the form of vibration of the main body or through display unit 151.

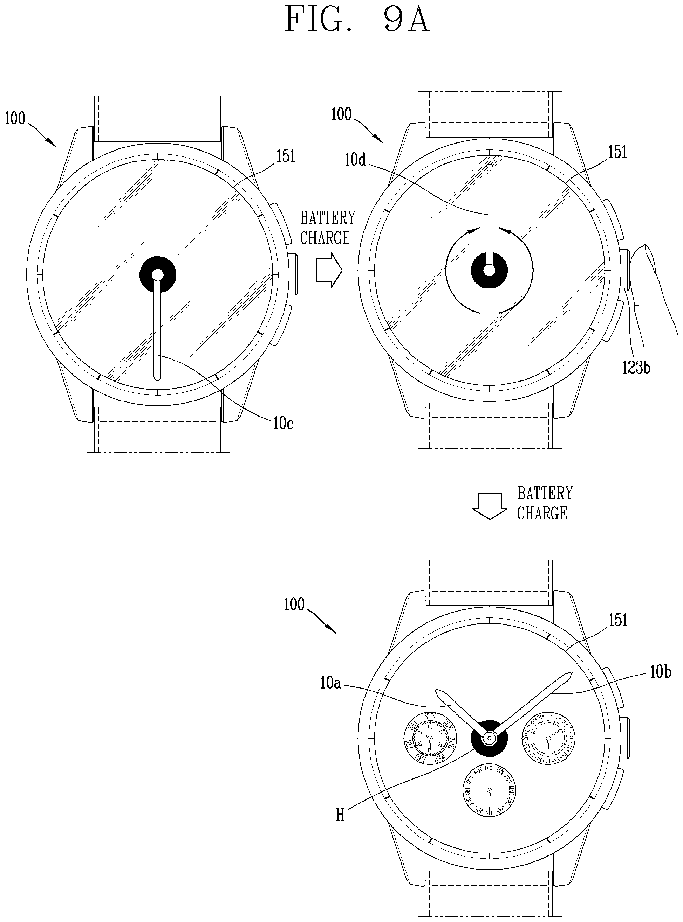

FIG. 9A is a view illustrating an example in which a clock function is activated when power is turned on after the battery is charged in a fully discharged state in a watch type terminal according to an embodiment of the present invention. When the battery is completely discharged in the watch mode, the operations of the mechanical clock hands of the analog watch part are also completely turned off. Thus, as shown in FIG. 9A, the mechanical clock hands are aligned in the direction of 6 o'clock (10c) so that stop of the clock function can be intuitively viewed. However, it should be noted that the alignment position (6 o'clock direction) shown in FIG. 9A is an example, and the directions of 3 o'clock or 9 o'clock may be alignment positions if it represents a physical time display.

When the battery is fully discharged, and when the battery is charged and an input is applied to the power key 123b to switch the processor to an ON state, the mechanical clock hands aligned in the direction of 6 o'clock are collected to the zero point, that is, in the direction of 12 o'clock (10d) and moved to a position indicating the current time (10a, 10b). Movement of the clock hands to show the visual effect is not essential, but it prevents a locating error of the mechanical clock hands and at the same time provides users with visual fun.

In another example, when the processor is turned on in the normal mode, assuming that the amount of charge of the battery can be checked even in a completely discharged state, the processor is automatically turned on and the mechanical clock hands are moved to the zero point, that is, in the direction of 12 o'clock (10d), the processor receives time information and the mechanical clock hands are moved to a position indicating the current time, and the normal mode in which the sensor, touch, the lay, BT, Wi-Fi, and the like, are activated is performed.

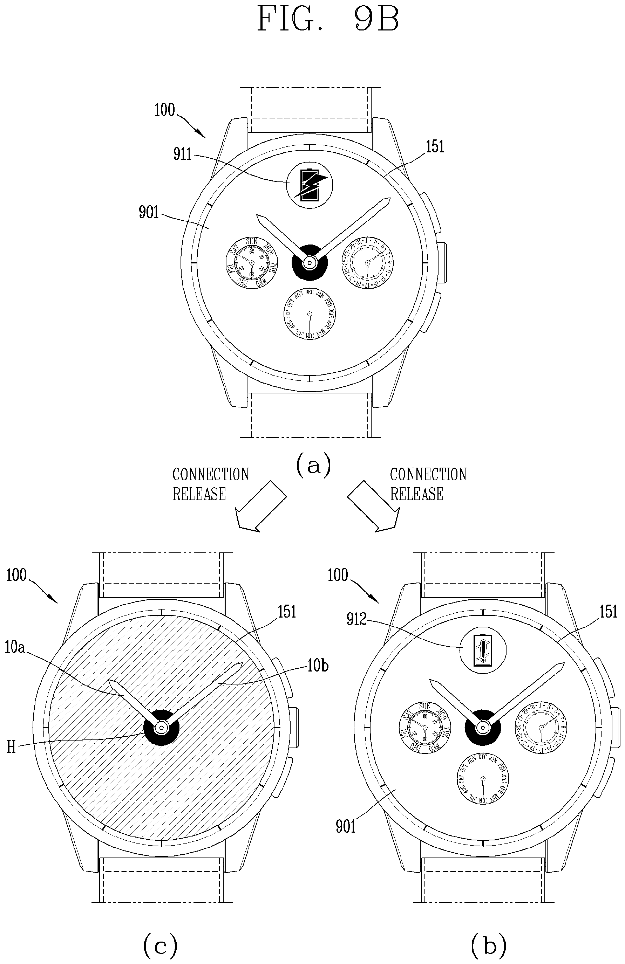

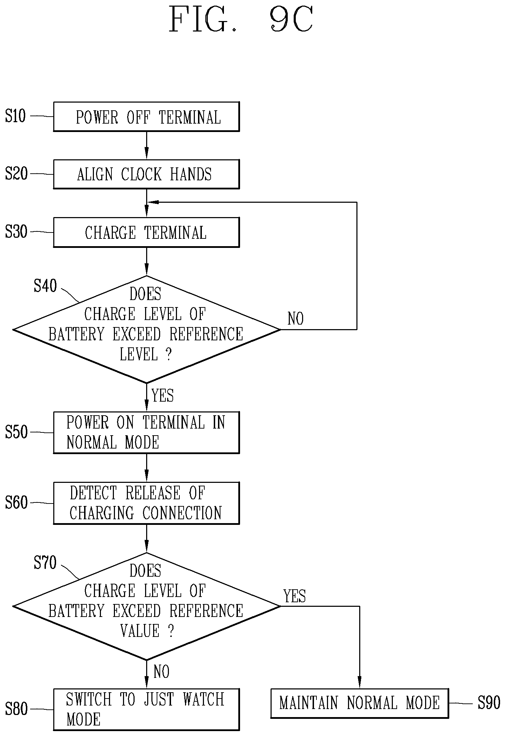

FIGS. 9B and 9C are explanatory diagrams illustrating various operation changes when charging connection is released while the battery is being charged in the watch mode described in the present invention, in a watch type terminal according to an embodiment of the present invention. Referring to FIG. 9B, when the battery charging (a) performed while the watch type terminal 100 is operated in the normal mode (901) is released from charging connection, the charge indication 911 that has been output to the display unit 151 disappears and the controller 180 checks a charge amount of the charged battery. Then, according to the check result, the normal mode is maintained (b) or the mode is switched to the watch mode (c).

Specifically, when the charge amount of the battery is less than a first reference level (e.g., 2%) according to the check result or with the lapse of time after the checking, only the clock function is held and the processor is turned off (or the processor is left in the ON state). In addition, when charging connection is released when the charge amount of the battery exceeds the first reference level (e.g., 2%), the normal mode is maintained.

However, if the charge amount does not exceed the second reference level included in the battery shortage, an indicator 912 indicating the battery shortage is output in the normal mode, and when the charge amount of the battery is decreased to below the first reference level with the lapse of time, the mode is switched to the watch mode as shown in (c).

Referring to FIG. 9C, the operation according to an embodiment of the present invention starts when the watch type terminal 100 is fully discharged and the power is off (S10). Then, in order to allow the user to intuitively know that the operation is stopped even in the watch mode according to an embodiment of the present invention, the mechanical hands, that is, the plurality of clock hands, are aligned to the predetermined position (S20).

Thereafter, when the watch type terminal 100 is charged (S30), the controller 180 determines whether the charge level of the battery exceeds a predetermined reference level (e.g., 15%) (S40). The determination can be performed at the time when the processor is actually turned on (i.e., after power of the watch type terminal 100 is turned on) because the processor of the present watch type terminal 100 is currently in the OFF state. Alternatively, in another example, it can be determined as the charging device senses a battery charge amount of the watch type terminal 100 and displays it on the outside (e.g., a screen).

If the charge level of the battery exceeds the predetermined reference level (Yes in S40), the power is turned on in the normal mode instead of the watch mode according to an embodiment of the present invention (S50). Accordingly, the display 151 and the sensing unit 140 of the main body are switched to an active state, and normal event notification, push notification, and the like, can be received and output.

If a charging connection is released after power of the watch type terminal 100 is turned on (S60), the controller 180 determines whether the charge level of the charged battery exceeds a reference value (S70). In addition, since the processor of the watch type terminal 100 is turned on, the charge amount of the battery of the main body can be detected.

As a result of the determination, if the charge amount of the battery is less than the reference value (e.g., less than 5%) (No in S70), the mode is switched to the watch mode in which the function of the clock can be emphasized, while minimizing battery consumption (S80). In addition, if the charge amount of the battery exceeds the reference value (e.g., less than 5%) (Yes in S70), the normal mode is maintained until the remaining charge amount reaches the reference value again (S90).

As described above, the watch type terminal according to the embodiment of the present invention maintains the function of the watch for a long time without charging by only a simple user input when the battery is low or if necessary. In addition, when the battery is charged, the built-in smart clock functions are immediately activated without an additional input according to the charge amount, thereby providing user convenience. In addition, even when the battery is empty, movement of the mechanical clock hands is possible for a few days, so the essential value as a watch is also highlighted.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the terminal.

The present invention is not limited to the described embodiments, rather the extension of the present invention shall be determined by the appended claims.

## Claims

1. A watch type terminal (100) comprising:
a main body (101);
an analog watch part including mechanical clock hands (10a, 10b) indicating time;
a display (151) disposed on the analog watch part; a location information module(115) for acquiring the position of the watch type terminal;
a user input unit (123a) disposed on a side surface of the main body(101); and
a processor (324) installed in the main body and configured to:
- receive a control command corresponding to a preset input of the user input unit (123a) while a normal mode in which the processor (324) is turned on and an operation of the analog watch part is performed, and
- receive a setting of an execution condition for entering a watch mode (312) in which the processor (324) is turned off and the operation of the analog watch part is maintained, in response to the preset input;
**characterized in that** the processor is further configured to,
in response to the execution condition being the determination through the location information module (115) of whether a user wearing the watch type terminal moves to a specific place where various smart functions of the watch type terminal are expected to be restricted,
automatically switch to the watch mode so as to prevent the execution of said various smart functions by switching off the processor while operation of the analog watch part is maintained.

2. The watch type terminal (100) of claim 1, wherein the processor (324) is further configured to:
display an execution screen (301) on the display for switching from the normal mode to the watch mode (312) in response to a push input applied to a first key included in the user input unit, and
switch from the normal mode to the watch mode (312) and turn the display and the processor to an OFF state in response to a positive feedback input on the execution screen (301).

3. The watch type terminal (100) of claim 2, wherein the processor is further configured to:
prevent other functions of the watch type terminal except for the clock function (325) by the analog watch part in the watch mode (312) based on the positive feedback input on the execution screen (301).

4. The watch type terminal (100) of any one of claims 1 to 3, further comprising:
a power supply unit (190) including a battery providing power to the main body,
wherein the processor (324) is further configured to:
determine whether a remaining charge amount of the battery is less than a reference value, and
switch to the watch mode (312) when the remaining charge amount of the battery is less than the reference value.

5. The watch type terminal (100) of claim 4, wherein the processor (324) is further configured to display a guidance screen on the display for switching to the watch mode when the remaining charge amount of the battery is less than the reference value.

6. The watch type terminal (100) of any one of claims 4 to 5, wherein the reference value is varied based on a user input.

7. The watch type terminal (100) of any one of claims 1 to 6, wherein the processor (324) is further configured to:
switch to the watch mode (312) according to execution of a specific application selected based on a touch input applied to the display (151).

8. The watch type terminal (100) of claim 7, wherein the processor (324) is further configured to:
set when the watch mode is executed using screen information according to the execution of the specific application.

9. The watch type terminal (100) of claim 8, wherein the screen information comprises at least one of a determined time zone, a determined position, and a determined charge amount of the battery.

10. The watch type terminal (100) of any one of claims 1 to 9, wherein the processor (324) is further configured to:
in response to a user input for switching from the watch mode (312) to the normal mode while the battery is being charged, switch to the normal mode based on a charge amount of the battery.

11. The watch type terminal (100) of claim 10, wherein when the charge amount of the battery is less than a reference level, the processor (324) is further configured to maintain the watch mode (312).

12. The watch type terminal (100) of claim 11, wherein when the charge amount of the battery exceeds the reference level, the processor (324) is further configured to switch to the normal mode.

13. The watch type terminal (100) of any one of claim 1 to 12, further comprising:
a power supply unit (190) including a battery providing power to the main body,
wherein the processor (324) is further configured to:
when the battery of the main body is discharged in the watch mode (312), arrange the mechanical clock hands (10a, 10b) of the analog watch part in a first determined alignment position wherein two clock hands indicating hour and minute simultaneously point to a same position, such that the user can intuitively know that the clock function is stopped, and
when a user input for switching to the normal mode is received after the battery is charged, arrange the mechanical clock hands (10a, 10b) in a second determined alignment position.

14. The watch type terminal (100) of any one of claims 1 to 13, further comprising:
a power supply unit (190) including a battery providing power to the main body,
wherein the processor (324) is further configured to:
when a charging connection is released while the battery is being charged in the watch mode (312), maintain the watch mode or switch to the normal mode according to a charge amount of the charged battery.

15. The watch type terminal (100) of any one of claims 1 to 14, wherein the display (151) includes a touch screen, and
wherein the user input unit includes a plurality of mechanical keys arranged on an outer circumference of the main body.

## Patentansprüche

1. Uhrartiges Endgerät (100), umfassend:
einen Hauptkörper (101);
ein analoges Uhrenteil mit mechanischen Uhrzeigern (10a, 10b), die die Zeit anzeigen;
eine Anzeige (151), die auf dem analogen Uhrenteil angeordnet ist;
ein Ortsinformationsmodul (115) zur Erfassung der Position des uhrartigen Endgeräts;
eine Benutzereingabeeinheit (123a), die auf einer Seitenfläche des Hauptkörpers (101) angeordnet ist; und
einen Prozessor (324), der im Hauptteil installiert ist und dazu eingerichtet ist:
- einen Steuerbefehl zu empfangen, der einer voreingestellten Eingabe der Benutzereingabeeinheit (123a) entspricht, während einer normalen Betriebsweise, in der der Prozessor (324) eingeschaltet ist und ein Betrieb des analogen Uhrenteils durchgeführt wird, und
- eine Einstellung einer Ausführungsbedingung für den Eintritt in eine Uhrbetriebsweise (312), in der der Prozessor (324) abgeschaltet wird und der Betrieb des analogen Uhrenteils aufrechterhalten wird, als Reaktion auf die voreingestellte Eingabe zu empfangen;
**dadurch gekennzeichnet, dass** der Prozessor ferner dazu eingerichtet ist, in Reaktion darauf, dass die Ausführungsbedingung die Bestimmung durch das Ortsinformationsmodul (115) ist, ob sich ein Benutzer, der das uhrartige Endgerät trägt, zu einem bestimmten Ort bewegt, an dem zu erwarten ist, dass verschiedene intelligente Funktionen des uhrartigen Endgeräts eingeschränkt sind, automatisch in die Uhrbetriebsweise umzuschalten, um die Ausführung der verschiedenen intelligenten Funktionen zu verhindern, indem der Prozessor abgeschaltet wird, während der Betrieb des analogen Uhrenteils aufrechterhalten wird.

2. Uhrartiges Endgerät (100) gemäß Anspruch 1, wobei der Prozessor (324) ferner dazu eingerichtet ist:
einen Ausführungsbildschirm (301) auf der Anzeige zum Umschalten von der normalen Betriebsweise in die Uhrbetriebsweise (312) als Reaktion auf eine Druckeingabe, die an einer ersten Taste in der Benutzereingabeeinheit erfolgt, anzuzeigen, und
von der normalen Betriebsweise in die Uhrbetriebsweise (312) umzuschalten und als Reaktion auf eine positive Feedbackeingabe auf dem Ausführungsbildschirm (301) die Anzeige und den Prozessor in einen AUS-Zustand zu schalten.

3. Uhrartiges Endgerät (100) gemäß Anspruch 2, wobei der Prozessor ferner dazu eingerichtet ist:
andere Funktionen des uhrartigen Endgeräts mit Ausnahme der Uhrfunktion (325) durch den analogen Uhrenteil in dem Uhrenmodus (312) auf der Grundlage der positiven Feedbackeingabe auf dem Ausführungsbildschirm (301) zu verhindern.

4. Uhrartiges Endgerät (100) gemäß einem der Ansprüche 1 bis 3, ferner umfassend:
eine Stromversorgungseinheit (190) einschließlich einer Batterie, die den Hauptkörper mit Strom versorgt,
wobei der Prozessor (324) ferner dazu eingerichtet ist:
zu bestimmen, ob eine verbleibende Ladungsmenge der Batterie kleiner als ein Referenzwert ist, und
auf die Uhrbetriebsweise (312) umzuschalten, wenn die verbleibende Ladungsmenge der Batterie kleiner als der Referenzwert ist.

5. Uhrartiges Endgerät (100) gemäß Anspruch 4, wobei der Prozessor (324) ferner dazu eingerichtet ist, auf der Anzeige einen Leitbildschirm zum Umschalten in die Uhrbetriebsweise anzuzeigen, wenn die Restladungsmenge der Batterie kleiner als der Referenzwert ist.

6. Uhrartiges Endgerät (100) gemäß einem der Ansprüche 4 bis 5, wobei der Referenzwert auf der Grundlage einer Benutzereingabe variiert wird.

7. Uhrartiges Endgerät (100) gemäß einem der Ansprüche 1 bis 6, wobei der Prozessor (324) ferner dazu eingerichtet ist:
in die Uhrbetriebsweise (312) umzuschalten, je nach Ausführung einer bestimmten Anwendung, die auf der Grundlage einer Berührungseingabe auf dem Display (151) ausgewählt wurde.

8. Uhrartiges Endgerät (100) gemäß Anspruch 7, wobei der Prozessor (324) ferner dazu eingerichtet ist:
einzustellen, wann die Uhrbetriebsweise unter Verwendung von Bildschirminformationen entsprechend der Ausführung der speziellen Anwendung ausgeführt wird.

9. Uhrartiges Endgerät (100) gemäß Anspruch 8, wobei die Bildschirminformation mindestens eine von einer bestimmten Zeitzone, einer bestimmten Position und einer bestimmten Ladungsmenge der Batterie umfasst.

10. Uhrartiges Endgerät (100) gemäß einem der Ansprüche 1 bis 9, wobei der Prozessor (324) ferner dazu eingerichtet ist:
als Reaktion auf eine Benutzereingabe zum Umschalten von der Uhrbetriebsweise (312) in die normale Betriebsweise, während die Batterie geladen wird, auf der Grundlage einer Lademenge der Batterie zur normalen Betriebsweise umzuschalten.

11. Uhrartiges Endgerät (100) gemäß Anspruch 10, wobei, wenn die Lademenge der Batterie geringer als ein Referenzpegel ist, der Prozessor (324) ferner dazu eingerichtet ist, die Uhrbetriebsweise (312) beizubehalten.

12. Uhrartiges Endgerät (100) gemäß Anspruch 11, wobei, wenn die Lademenge der Batterie den Referenzpegel überschreitet, der Prozessor (324) ferner dazu eingerichtet ist, zur normalen Betriebsweise umzuschalten.

13. Das Uhrentyp-Terminal (100) gemäß einem der Ansprüche 1 bis 12, ferner umfassend:
eine Stromversorgungseinheit (190) einschließlich einer Batterie, die den Hauptkörper mit Strom versorgt,
wobei der Prozessor (324) ferner dazu eingerichtet ist:
wenn die Batterie des Hauptkörpers in der Uhrbetriebsweise (312) entladen ist, die mechanischen Uhrzeiger (10a, 10b) des analogen Uhrenteils in einer ersten bestimmten Ausrichtungsposition anzuordnen, in der zwei Uhrzeiger, die Stunde und Minute anzeigen, gleichzeitig auf eine gleiche Position zeigen, so dass der Benutzer intuitiv wissen kann, dass die Uhrfunktion gestoppt ist, und
wenn nach dem Aufladen der Batterie eine Benutzereingabe zum Umschalten zur normalen Betriebsweise empfangen wird, die mechanischen Uhrzeiger (10a, 10b) in einer zweiten festgelegten Ausrichtungsposition anzuordnen.

14. Uhrartiges Endgerät (100) gemäß einem der Ansprüche 1 bis 13, ferner umfassend:
eine Stromversorgungseinheit (190) einschließlich einer Batterie, die den Hauptkörper mit Strom versorgt,
wobei der Prozessor (324) ferner dazu eingerichtet ist:
wenn eine Ladeverbindung gelöst wird, während die Batterie in der Uhrbetriebsweise (312) geladen wird, die Uhrbetriebsweise aufrechtzuerhalten oder je nach Lademenge der geladenen Batterie zu der normalen Betriebsweise umzuschalten.

15. Uhrartiges Endgerät (100) gemäß einem der Ansprüche 1 bis 14, wobei die Anzeige (151) einen Touchscreen umfasst, und
wobei die Benutzereingabeeinheit eine Vielzahl von mechanischen Tasten umfasst, die an einem äußeren Umfang des Hauptkörpers angeordnet sind.

## Revendications

1. Terminal de type montre (100) comprenant :
un corps principal (101) ;
une partie de montre analogique incluant des aiguilles mécaniques (10a, 10b) indiquant l'heure ;
un afficheur (151) disposé sur la partie de montre analogique ;
un module (115) d'information de localisation pour acquérir la position du terminal de type montre ;
une unité (123a) d'entrée d'utilisateur disposée sur une surface latérale du corps principal (101) ; et
un processeur (324) installé dans le corps principal et configuré pour :
- recevoir une commande de contrôle correspondant à une entrée prédéfinie de l'unité (123a) d'entrée d'utilisateur durant un mode normal dans lequel le processeur (324) est activé et une opération de la partie de montre analogique est exécutée, et
- recevoir un paramétrage d'une condition d'exécution pour entrer dans un mode montre (312) dans lequel le processeur (324) est désactivé et l'opération de la partie de montre analogique est maintenue, en réponse à l'entrée prédéfinie ;
**caractérisé en ce que** le processeur est en outre configuré pour, en réponse à la condition d'exécution étant la détermination par l'intermédiaire du module (115) d'information de localisation si un utilisateur portant le terminal de type montre se déplace jusqu'à un endroit spécifique où diverses fonctions intelligentes du terminal de type montre sont susceptibles d'être restreintes, passer automatiquement dans le mode montre de manière à empêcher l'exécution desdites diverses fonctions intelligentes en désactivant le processeur alors que l'opération de la partie de montre analogique est maintenue.

2. Terminal de type montre (100) selon la revendication 1, dans lequel le processeur est en outre configuré pour :
afficher un écran d'exécution (301) sur l'afficheur pour passer du mode normal au mode montre (312) en réponse à une entrée par poussée appliquée à une première touche incluse dans l'unité d'entrée d'utilisateur, et
passer du mode normal au mode montre (312) et mettre l'afficheur et le processeur dans un état désactivé en réponse à une entrée positive de rétroaction sur l'écran d'exécution (301).

3. Terminal de type montre (100) selon la revendication 2, dans lequel le processeur est en outre configuré pour :
empêcher d'autres fonctions du terminal de type montre à l'exception de la fonction d'horloge (325) par la partie de montre analogique dans le mode montre (312) sur la base de l'entrée positive de rétroaction sur l'écran d'exécution (301).

4. Terminal de type montre (100) selon l'une quelconque des revendications 1 à 3, comprenant en outre :
une unité (190) d'alimentation électrique incluant une batterie fournissant de l'énergie électrique au corps principal,
dans lequel le processeur (324) est en outre configuré pour :
déterminer si une quantité de charge restante de la batterie est inférieure à une valeur de référence, et
passer dans le mode montre (312) lorsque la quantité de charge restante de la batterie est inférieure à la valeur de référence.

5. Terminal de type montre (100) selon la revendication 4, dans lequel le processeur (324) est en outre configuré pour afficher un écran de guidage sur l'afficheur pour passer dans le mode montre lorsque la quantité de charge restante de la batterie est inférieure à la valeur de référence.

6. Terminal de type montre (100) selon l'une quelconque des revendications 4 à 5, dans lequel la valeur de référence est faite varier sur la base d'une entrée d'utilisateur.

7. Terminal de type montre (100) selon l'une quelconque des revendications 1 à 6, dans lequel le processeur (324) est en outre configuré pour :
passer dans le mode montre (312) conformément à l'exécution d'une application spécifique sélectionnée sur la base d'une entrée tactile appliquée à l'afficheur (151).

8. Terminal de type montre (100) selon la revendication 7, dans lequel le processeur (324) est en outre configuré pour :
définir quand le mode montre est exécuté en utilisant des informations d'écran conformément à l'exécution de l'application spécifique.

9. Terminal de type montre (100) selon la revendication 8, dans lequel les informations d'écran comprennent au moins un(e) parmi un fuseau horaire déterminé, une position déterminée, et une quantité de charge déterminée de la batterie.

10. Terminal de type montre (100) selon l'une quelconque des revendications 1 à 9, dans lequel le processeur (324) est en outre configuré pour :
en réponse à une entrée d'utilisateur pour passer du mode montre (312) au mode normal alors que la batterie est en cours de charge, passer au mode normal sur la base d'une quantité de charge de la batterie.

11. Terminal de type montre (100) selon la revendication 10, dans lequel, lorsque la quantité de charge de la batterie est inférieure à un niveau de référence, le processeur (324) est en outre configuré pour maintenir le mode montre (312).

12. Terminal de type montre (100) selon la revendication 11, dans lequel, lorsque la quantité de charge de la batterie excède le niveau de référence, le processeur (324) est en outre configuré pour passer au mode normal.

13. Terminal de type montre (100) selon l'une quelconque des revendications 1 à 12, comprenant en outre :
une unité (190) d'alimentation électrique incluant une batterie fournissant de l'énergie électrique au corps principal,
dans lequel le processeur (324) est en outre configuré pour :
lorsque la batterie du corps principal est déchargée dans le mode montre (312), agencer les aiguilles mécaniques (10a, 10b) de la partie de montre analogique dans une première position d'alignement déterminée dans laquelle deux aiguilles indiquant une heure et une minute simultanément pointent sur une même position, de telle sorte que l'utilisateur peut intuitivement savoir que la fonction d'horloge est stoppée, et
lorsqu'une entrée d'utilisateur pour passer au mode normal est reçue après que la batterie a été chargée, agencer les aiguilles mécaniques (10a, 10b) dans une deuxième position d'alignement déterminée.

14. Terminal de type montre (100) selon l'une quelconque des revendications 1 à 13, comprenant en outre :
une unité (190) d'alimentation électrique incluant une batterie fournissant de l'énergie électrique au corps principal,
dans lequel le processeur (324) est en outre configuré pour :
lorsqu'une connexion de charge est débranchée alors que la batterie est en cours de charge dans le mode montre (312), maintenir le mode montre ou passer au mode normal conformément à une quantité de charge de la batterie chargée.

15. Terminal de type montre (100) selon l'une quelconque des revendications 1 à 14, dans lequel l'afficheur (151) inclut un écran tactile, et
dans lequel l'unité d'entrée d'utilisateur inclut une pluralité de touches mécaniques agencées sur une circonférence extérieure du corps principal.
